# EUROPÄISCHE PATENTANMELDUNG

(11) **EP 1 031 365 A1**
(43) Veröffentlichungstag der Anmeldung: **30.08.2000**
(21) Anmeldenummer: 00103376.0
(22) Anmeldetag: 23.02.2000
(51) Int. Cl.: B01D 21/01, B01D 37/03

(54) **Verfahren zur Herstellung von Teilchenagglomeraten durch Umbenetzen**

(30) Priorität: 24.02.1999 DE 19907933
(71) Anmelder: BASF AKTIENGESELLSCHAFT, 67056 Ludwigshafen (DE)
(72) Erfinder: Franke, Dirk, Dr., 67065 Ludwigshafen (DE); Bröckel, Ulrich, Dr., 67251 Freinsheim (DE); Wolf, Heiko, 67227 Frankenthal (DE); Gösele, Walter, Dr., 69123 Heidelberg (DE)
(74) Vertreter: Isenbruck, Günter, Dr.

(57) **Zusammenfassung**

Die Erfindung betrifft ein Verfahren zur Herstellung eines Teilchenagglomerats, wobei eine eine Menge an Teilchen beinhaltende Teilchenphase mit einer Umbenetzungsphase zur Bildung einer Agglomeratphase in Kontakt gebracht wird, wobei als ein erster Parameter die Temperatur der Agglomeratphase in einem Bereich variiert wird, wobei die Umbenetzungsphase und die Teilchenphase zumindest teilweise von einander getrennt vorliegen, ein Teilchenagglomerat erhältlich durch dieses Verfahren sowie die Verwendung dieses Verfahrens zur Verbesserung der Abtrennbarkeit von Teilchen aus Teilchenphasen.

## Beschreibung

Die Erfindung betrifft ein Verfahren zur Herstellung von Teilchenagglomeraten, ein Teilchenagglomerat erhältlich durch dieses Verfahren sowie die Verwendung dieses Verfahrens oder dieses Teilchenagglomerats zur Verbesserung der Abtrennbarkeit von Teilchen aus Teilchenphasen.

In vielen Bereichen der Technik stellt sich das Problem, daß in einem fest/flüssig-System kleinste Feststoffteilchen in einer flüssigen Phase vorliegen und von der flüssigen Phase abgetrennt werden sollen. Diese Abtrennung ist in der Regel sehr mühsam, da sich sehr kleine Teilchen nur sehr zeitaufwendig und unter hohem technischen Aufwand abfiltrieren oder abzentriftigieren lassen. Derartige Systeme lassen sich in den unterschiedlichsten technischen Gebieten wie beispielsweise angefangen bei der Synthese von Feststoffen aller Art, bei der Aufbereitung von Abfällen, Nebenprodukten und Rückständen sowie bei der Aufarbeitung von Bodenschätzen, der Wasseraufbereitung und der Rauchgaswäsche sowie bei der Herstellung von Vitaminen und Arzneiwirkstoffen antreffen.

So fallen beispielsweise bei der Farbstoff-, Kunststoff- oder Füllstoffherstellung Gemische von feinsten Feststoffteilchen mit Flüssigkeiten an. Abgesehen von den zuvor erwähnten Problemen bei der Filtration derartiger Mischungen ist es darüber hinaus aufgrund der wegen der großen spezifischen Oberfläche der kleinen Teilchen in großen Mengen anhaftenden Flüssigkeit sehr aufwendig, die als Filterrückstände gewonnenen Feststoffe durch Trocknung möglichst restlos von der Flüssigkeit zu befreien. Der Aufwand, der für die vorangehend beschriebene Trocknung aufgebracht werden muß, ist um so höher, je höher siedend die Flüssigkeit ist oder je stärker die Flüssigkeit mit den festen Teilchen in Wechselwirkung tritt. Derartige hohe Siedetemperaturen und starke Wechselwirkungen, vornehmlich Dipolwechselwirkungen, treten insbesondere bei stark polaren Flüssigkeiten wie Wasser auf Daher ist es nicht verwunderlich, daß die Abtrennung und anschließende Trocknung von Mischungen aus feinen Teilchen mit Wasser besonders aufwendig und zeitintensiv ist.

US 4,033,729 offenbart ein Verfahren zur Trennung von Kohle und Asche, in dem eine Kohle-Asche-Suspension in Öl mit einer wäßrigen Agglomerationsflüssigkeit gemischt wird und ein teilchenförmiges Material mit einer hydrophilen Oberfläche zugesetzt, gerührt, und anschließend das Ascheagglomerat abgetrennt wird. Diese Offenbarung ist insofern nachteilhaft, weil hier nur die Trennung von verschiedenen Feststoffen, jedoch nicht die Trennung von Feststoffteilchen aus Flüssigphasen gelehrt wird.

Weiterhin betrifft US 4,303,505 ein Verfahren zur Entfernung von hydrophilen Bestandteilen aus fließfähigen hydrophilen Mischungen und Suspensionen über eine durch Zugabe von Wasser und einem fein verteilten Material erhältliche zähe Paste. Diese Offenbarung ist insofern nachteilhaft, da neben dem Zusatz einer Agglomerationsflüssigkeit auch noch ein fein verteilter Feststoff als Agglomerationshilfsmittel zugesetzt werden muß.

Eine erfindungsgemäße Aufgabe liegt nunmehr in der Überwindung der vorgenannten Nachteile, um insbesondere die Abtrennbarkeit von Teilchen aus Flüssigphasen zu verbessern.

Diese Aufgabe wird erfindungsgemäß durch ein Verfahren zur Herstellung eines Teilchenagglomerats gelöst, wobei eine eine Menge an Teilchen beinhaltende Teilchenphase mit einer Umbenetzungsphase zur Bildung einer Agglomeratphase in Kontakt gebracht wird, wobei als ein erster Parameter die Temperatur der Agglomeratphase in einem Bereich variiert wird, in dem die Umbenetzungsphase und die Teilchenphase zumindest teilweise voneinander getrennt vorliegen.

Umbenetzungs- und Teilchenphase liegen dann getrennt voneinander vor, wenn zwischen der Umbenetzungsphase und mindestens einem neben den Teilchen zusätzlichen Bestandteil der Teilchenphase eine Phasengrenze besteht. Dieses ist beispielsweise der Fall, wenn in einer neben den Teilchen Wasser enthaltenden Teilchenphase so viel Hexanol als Umbenetzungsphase vorliegt, daß die Sättigung der Teilchenphase überschritten ist und das Hexanol als Tropfen mit einer Phasengrenze zu dem Wasser in der Teilchenphase vorliegt.

Besonders ist es erfindungsgemäß bevorzugt, daß kein Feststoff als Agglomerationshilfsmittel im Verfahren zur Herstellung eines Teilchenagglomerats eingesetzt wird. Bei dem Agglomerationshilfsmittel handelt es sich vorzugsweise um ein hydrophiles Material. Zudem ist es bevorzugt, daß sich im Laufe des erfindungsgemäßen Verfahrens nicht-zähe, vorzugsweise wäßrige Paste bildet.

Erfindungsgemäß wird unter einer eine Menge an Teilchen beinhaltenden Teilchenphase ein Gemisch aus Feststoffteilchen und einem Fluid, vorzugsweise einer Flüssigkeit und besonders bevorzugt einer Wasser beinhaltenden Flüssigkeit, verstanden. Der Fluid- bzw. Wasseranteil an der Teilchenphase liegt im Bereich von 50 bis 99,9, bevorzugt von 60 bis 99 und besonders bevorzugt von 80 bis 98 Gew.-%, bezogen auf die Teilchenphase.

Erfindungsgemäße Teilchenagglomerate weisen mindestens zwei einzelne Teilchen der Teilchenphase auf, die über Teile der aneinander angrenzenden Oberfläche über Umbenetzungsphase gebunden aneinander angrenzen.

Bei der erfindungsgemäßen Umbenetzungsphase handelt es sich um ein Fluid und bevorzugt um eine Flüssigkeit, die, wenn sie mit der Teilchenphase in Kontakt gebracht wird, die Bildung von Teilchenagglomeraten in einer Agglomeratphase induziert. Es ist erfindungsgemäß bevorzugt, daß sich die Umbenetzungsphase bis maximal 10, bevorzugt maximal 7 und besonders bevorzugt maximal 5 Vol.-%, bezogen auf die Teilchenphase, in der Teilchenphase löst und somit teillöslich in der Teilchenphase ist. Weiterhin ist es erfindungsgemäß bevorzugt, daß die Umbenetzungsphase einen organischen Bestandteil aufweist. Vorzugsweise liegt dieser organische Bestandteil unter den Verfahrensparametern als Flüssigkeit vor.

Als organischer Bestandteil der Umbenetzungsphase besonders bevorzugt sind ein Alkohol oder eine Carbonsäure, die jeweils unabhängig voneinander 3 bis 50, bevorzugt 4 bis 30 und besonders bevorzugt 5 bis 20 Kohlenstoffatome aufweisen.

Unter den vorgenannten Alkoholen besonders bevorzugt sind 1-Butanol, Isobutanol, Tertiärbutanol, 1-Pentanol, 2-Pentanol, 3-Pentanol, 1-Hexanol, 2-Hexanol, 3-Hexanol, 1-Heptanol, 2-Heptanol, 3-Heptanol, 4-Heptanol, 1-Octanol, 2-Octanol, 3-Octanol, 4-Octanol, 5-Octanol, 1-Decanol, 2-Decanol, 3-Decanol, 4-Decanol, 5-Decanol, 1-Undecanol, 2-Undecanol, 3-Undecanol, 4-Undecanol, 5-Undecanol, 1-Dodecanol, 2-Dodecanol, 3-Dodecanol, 4-Dodecanol, 5-Dodecanol, 6-Dodecanol, 1-Tridecanol, 2-Tridecanol, 3-Tridecanol, 4-Tridecanol, 5-Tridecanol, 6-Tridecanol oder Gemische aus mindestens zwei davon.

In den vorbezeichneten Carbonsäuren haben sich aliphatische Carbonsäuren bewährt. Unter diesen sind Pentansäure, Hexansäure, 1-Heptansäure, Octansäure, Nonansäure, Decansäure, Undecansäure, Dodecansäure, Tridecansäure oder Gemische aus mindestens zwei davon bevorzugt.

Die vorgenannten Alkohole oder Carbonsäuren müssen nicht in reiner Form eingesetzt werden, sondern können gleichfalls in Form der bei ihrer Synthese anfallenden technischen Gemische in dem erfindungsgemäßen Verfahren eingesetzt werden.

In dem erfindungsgemäßen Verfahren haben sich Pentanole, Hexanole oder Heptanole oder Gemische aus mindestens zwei davon besonders bewährt. Insbesondere haben sich Alkohole zur Herstellung von Teilchenagglomeraten als geeignet herausgestellt, in denen die Teilchen vorwiegend aus organischem Material bestehen.

Diese Verbindungen können sowohl aliphatische als auch aromatische Bestandteile aufweisen, wobei aromatische Verbindungen besonders bevorzugt sind. Unter diesen wiederum sind Verbindungen bevorzugt, die neben den aromatischen Bestandteilen zusätzlich Heteroatome, vorzugsweise Sauerstoff, Stickstoff, Schwefel und besonders bevorzugt Stickstoff und Sauerstoff aufweisen. Unter den organischen Materialien besonders bevorzugt sind organische Farbstoffe und Pigmente.

Unter den Carbonsäuren haben sich erfindungsgemäß Hexansäuren, Heptansäuren und Octansäuren, bevorzugt Octansäuren besonders bewährt. Carbonsäuren fielen insbesondere durch ihre gute Eignung in Verfahren zur Herstellung von Teilchenagglomeraten auf, wenn die Teilchen der Teilchenphase aus vorwiegend anorganischem Material bestanden.

Erfindungsgemäße anorganische Materialien sind vorzugsweise Salze aus einem Metallkation und einem mindestens ein Sauerstoffatom aufweisenden Anion. Als Metalle sind die Metalle der ersten, zweiten und dritten und besonders bevorzugt der dritten Gruppe des Periodensystems der Elemente bevorzugt. Aus den Metallen der dritten Gruppe des Periodensystems der Elemente ist wiederum Aluminium besonders bevorzugt.

Erfindungsgemäß Sauerstoff beinhaltende Anionen sind vorzugsweise Oxalat, Sulfat, Carbonat, Hydroxyd und Oxyhydrat, wobei Oxyhydrat besonders bevorzugt ist.

Sowohl die organischen als auch die anorganischen Materialien werden sinnvollerweise so ausgewählt, daß sie in dem Fluid der Teilchenphase im wesentlichen unlöslich sind.

Weiterhin ist erfindungsgemäß ein Verfahren bevorzugt, wobei als weiterer Parameter der pH-Wert der Agglomeratphase oder Parameter die Konzentration eines Salzes in der Agglomeratphase oder ab weitere Parameter dieser pH-Wert und diese Konzentration variiert werden, wobei die Umbenetzungsphase und die Teilchenphase zumindest teilweise von einander getrennt vorliegen.

Für das erfindungsgemäße Verfahren ist es vorteilhaft, wenn als erster Parameter die Temperatur in einem Bereich von 10 bis 150, bevorzugt von 20 bis 90° C, als weiterer Parameter der pH-Wert der Agglomeratphase in einem Bereich von 1 bis 14, bevorzugt von 2 bis 12 und besonders bevorzugt von 5 bis 10 oder als weiterer Parameter die Konzentration eines Salzes in der Agglomeratphase in einem Bereich von 0,01 bis 30, bevorzugt 0,1 bis 20 und besonders bevorzugt 1 bis 10 Gew.-%, bezogen auf die Agglomeratphase, oder die drei Parameter zusammen variiert werden.

Bei der Herstellung von Agglomeraten aus organischem Material hat es sich besonders bewährt, die Agglomeratphase in einem Temperaturbereich von 10 bis 30°C zu bilden und anschließend die Agglomeratbildung bei höheren Temperaturen, vorzugsweise im Bereich von 40 bis 90, bevorzugt 45 bis 70 und besonders bevorzugt im Bereich von 50 bis 60°C erfolgen zu lassen. Ferner ist es bei der Herstellung von Agglomeraten aus organischem Material bevorzugt, den pH-Wert in einem Bereich von 6 bis 14, bevorzugt von 7 bis 11 und besonders bevorzugt von 7,5 bis 9 zu wählen. In diesem Zusammenhang hat sich die Zugabe von Alkali- und Erdalkalilaugen, vorzugsweise NaOH oder KOH, als vorteilhaft erwiesen. Zudem ist es bei der Herstellung von Agglomeraten aus organischem Material vor der Zugabe der Umbenetzungsphase bevorzugt, den pH-Wert in einem Bereich von 5 bis 0, bevorzugt von 4 bis 0 und besonders bevorzugt von 3 bis 0 zu wählen. In diesem Zusammenhang hat sich die Zugabe von Mineralsäuren, vorzugsweise H₂SO₄, als vorteilhaft erwiesen.

Bei der Herstellung von Agglomeraten aus anorganischem Material hat es sich besonders bewährt, die Agglomeratphase in einem Temperaturbereich von 10 bis 30°C zu bilden und anschließend die Agglomeratbildung zunächst bei höheren Temperaturen, vorzugsweise im Bereich von 40 bis 90, bevorzugt 50 bis 70 und besonders bevorzugt im Bereich von 55 bis 65°C und, nach Erreichen dieser, wieder auf Temperaturen im Bereich von 10 bis 30°C erfolgen zu lassen.

Die Salze werden vorzugsweise so gewählt, daß sie in der Agglomeratphase löslich sind. Als Salze bevorzugt sind Metallsalze mit hohem Dissoziationsgrad, insbesondere NaCl, KCl oder Na₂SO₄.

Weiterhin ist es erfindungsgemäß bevorzugt, daß mindestens 10, bevorzugt mindestens 20 und besonders bevorzugt mindestens 50 Gew.-% der Teilchen der Teilchenphase eine Größe im Bereich von 0,001 bis 2, bevorzugt 0,005 bis 1,5 und besonders bevorzugt 0,01 bis 1 µm besitzen.

Die durch das erfindungsgemäße Verfahren hergestellten Teilchenagglomerate besitzen eine Größe im Bereich von 2 bis 800, bevorzugt 3 bis 500 und besonders bevorzugt 10 bis 500 µm. Die Teilchengröße wird über bildanalytische Verfahren oder Lichtbeugung bestimmt.

Zudem wird in dem erfindungsgemäßen Verfahren vorzugsweise das Teilchenagglomerat von der Agglomeratphase abgetrennt. Dies geschieht bevorzugt im Wege der Filtration oder Sedimentation. Die Filtration kann durch dem Fachmann allgemein bekannte Filtrationsvorrichtungen und Filter ausgeführt werden. Bei der Sedimentation können neben der Erdanziehungskraft auch Zentrifugalkräften zur Trennung eingesetzt werden.

Weiterhin ist es bevorzugt, daß die in dem erfindungsgemäßen Verfahren eingesetzte Umbenetzungsphase zurückgewonnen wird. Dieses kann durch dem Fachmann allgemein bekannte Verfahren, wie Destillation oder Strippen, geschehen.

Erfindungsgemäß ist das Teilchenagglomerat erhältlich durch Inkontaktbringen einer eine Menge an Teilchen beinhaltenden Teilchenphase mit einer Umbenetzungsphase zur Bildung einer Agglomeratphase, wobei als ein erster Parameter die Temperatur der Agglomeratphase in einem Bereich variiert wird, in dem die Teilchenphase und die Umbenetzungsphase zumindest teilweise flüssig vorliegen.

Zum Inkontaktbringen einer eine Menge an Teilchen beinhaltenden Teilchenphase mit einer Umbenetzungsphase können dem Fachmann allgemein bekannte Verfahren eingesetzt werden. Bei der Auswahl geeigneter Verfahren ist darauf zu achten, daß eine möglichst vollständige und gleichmäßige Mischung der Teilchenphase mit der Umbenetzungsphase gewährleistet ist. Hierbei ist ferner zu beachten, daß durch die eingesetzten Mischwerkzeuge die Teilchengröße der Teilchen der Teilchenphase nicht noch weiter verringert wird. Besonders bewährt haben sich in diesem Zusammenhang statische Mischer und Rührwerke.

Es ist bevorzugt, das erfindungsgemäße Verfahren oder das durch das erfindungsgemäße Verfahren erhältliche Teilchenagglomerat zur Trennung von Teilchen aus Teilchenphasen, insbesondere Dispersionen, zu verwenden.

Diese Verwendung gilt neben den eingangs genannten Anwendungsgebieten insbesondere für die Farbstoff-, Kunststoff-, Füllstoffherstellung oder Abfall-, Abgasreinigung oder zur Aufbereitung von Bodenschätzen.

Die Erfindung wird nun anhand nicht einschränkender Beispiele näher erläutert.

### BEISPIELE

### Beispiel 1

Das organische Pigment 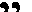 Pigment rot 122" (Quinancridon) lag in einer Teilchengröße im Bereich von 50 bis 100 nm in wäßriger, schwefelsaurer Suspension mit einem Masseanteil von 0,5 Gew.-% vor. Jeweils Pentanol, Hexanol und Heptanol in einer Menge von 80 Gew.-% bezogen auf das organische Pigment, als Umbenetzungsphasen wurden der Suspension bei 23°C zugeführt, und anschließend die daraus gebildete Agglomeratphase auf 55°C bei einem pH-Wert von 8,3, der durch die Zugabe von 1-molarer Natronlauge eingestellt wurde, erwärmt. Es wurde für jede Umbenetzungsphase eine Agglomeration mit Teilchen in einer Größe im Bereich von 50 bis 500 µm in einer Ausbeute von ca. 80% erhalten.

### Beispiel 2

Ein Aluminium-Oxyhydrat ( 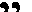 Böhmit", AlOOH) lag in wäßriger Suspension mit einem Feststoffgehalt von 3 Gew.-%, bezogen auf die Suspension, und mit einer Teilchengröße von ca. 0,01 µm vor. Die Umbenetzungsphase wurde in einer Menge von 3 Vol-%, bezogen auf die Suspension, bei einer Temperatur von 22°C der Suspension zur Bildung der Agglomeratphase zugegeben. Die Agglomeratphase wurde anschließend auf 60°C erwärmt und anschließend auf 20°C abgekühlt. Als Umbenetzungsphasen wurden jeweils Dieselöl, Ölsäure, Hexansäure oder Octansäure eingesetzt. Im Fall der Hexansäure und der Octansäure wurden nach der Abkühlung Agglomerate des Böhmit erhalten, die eine Teilchengröße von 10 bis 500 µm aufwiesen. Die Ausbeute betrug ca. 80 %. Die anderen Umbenetzungsphasen führten zu keiner Agglomeratbildung.

## Patentansprüche

1. Verfahren zur Herstellung eines Teilchenagglomerats, wobei eine eine Menge an Teilchen beinhaltende Teilchenphase mit einer Umbenetzungsphase zur Bildung einer Agglomeratphase in Kontakt gebracht wird, wobei als ein erster Parameter die Temperatur der Agglomeratphase in einem Bereich variiert wird, in dem die Umbenetzungsphase und die Teilchenphase zumindest teilweise voneinander getrennt vorliegen.

2. Verfahren nach Anspruch 1, wobei als weiterer Parameter der pH-Wert der Agglomeratphase oder als ein dritter Parameter die Konzentration eines Salzes in der Agglomeratphase oder ab weitere Parameter dieser pH-Wert und diese Konzentration variiert werden, wobei die Umbenetzungsphase und die Teilchenphase zumindest teilweise von einander getrennt vorliegen.

3. Verfahren nach Anspruch 1 oder 2, wobei mindestens 10 Gew.-% der Teilchen der Teilchenphase eine Größe im Bereich von 0,001 bis 2 µm besitzen.

4. Verfahren nach einem der Ansprüche 1 bis 3, wobei die Teilchenphase Wasser beinhaltet.

5. Verfahren nach einem der Ansprüche 1 bis 4, wobei die Umbenetzungsphase bis maximal 10 Vol.-%, bezogen auf die Teilchenphase, in der Teilchenphase löslich ist.

6. Verfahren nach einem der Ansprüche 1 bis 5, wobei die Umbenetzungsphase einen organischen Bestandteil aufweist.

7. Verfahren nach Anspruch 6, wobei der organische Bestandteil ein Alkohol oder eine Carbonsäure ist, die jeweils unabhängig voneinander 3 bis 50 Kohlenstoffatome aufweisen.

8. Verfahren nach einem der Ansprüche 1 bis 7, wobei das Teilchenagglomerat von der Agglomeratphase abgetrennt wird.

9. Verfahren nach Anspruch 8, wobei durch Filtration oder Sedimentation oder beide Methoden abgetrennt wird.

10. Verfahren nach Anspruch 9, wobei die Umbenetzungsphase zurückgewonnen wird.

11. Teilchenagglomerat, erhältlich durch Inkontaktbringen einer eine Menge an Teilchen beinhaltenden Teilchenphase mit einer Umbenetzungsphase zur Bildung einer Agglomeratphase, wobei als ein erster Parameter die Temperatur der Agglomeratphase in einem Bereich variiert wird, in dem die Umbenetzungsphase und die Teilchenphase zumindest teilweise voneinander getrennt vorliegen.

12. Verwendung des Verfahrens gemäß einem der Ansprüche 1 bis 10 oder des Teilchenagglomerats gemäß Anspruch 11 zum Trennen von Teilchen aus Teilchenphasen.
